# EUROPÄISCHE PATENTSCHRIFT

(11) **EP 2 190 232 B1**
(45) Veröffentlichungstag und Bekanntmachung des Hinweises auf die Patenterteilung: **01.07.2015**
(21) Anmeldenummer: 09175772.4
(22) Anmeldetag: 12.11.2009
(51) Int. Cl.: H04W 12/02, H04W 12/04, H04L 29/06, G07F 7/10, G06Q 20/32, G06Q 20/34, H04W 8/20

(54) **Verfahren zum Bereitstellen von Daten auf mindestens einen Bereich einer Chip-Karte**
Method for providing data on at least one area of a chip card
Procédé de préparation de données sur au moins une zone de carte puce

(30) Priorität: 14.11.2008 DE 102008057464
(43) Veröffentlichungstag der Anmeldung: 26.05.2010
(73) Patentinhaber: Vodafone Holding GmbH, 40213 Düsseldorf (DE)
(72) Erfinder: Linden, Holger, 41812, Erkelenz (DE); Müller, Frank, 40237, Düsseldorf (DE); Dohmann, Dierk, 40547, Düsseldorf (DE); Varelmann, Kerstin, 48432, Rheine (DE)
(74) Vertreter: Bals, Rüdiger

(56) Entgegenhaltungen:
- EP-A2- 1 860 840
- US-A1- 2008 162 715

## Beschreibung

Die vorliegende Erfindung betrifft ein Verfahren zum Bereitstellen von Daten auf mindestens einen, vorzugsweise gesicherten, Bereich einer Chip-Karte, vorzugsweise einer SIM-Karte.

In modernen Telekommunikationssystemen werden die Zugriffe auf verfügbare Kommunikationsressourcen durch unterschiedliche Benutzer in unterschiedlichen Kommunikationsnetzen unter Verwendung von SIM-Karten (SIM: Subscriber Identity Module) verwaltet. Sollen mehrere Drittparteien, z.B. unterschiedliche Netzbetreiber, auf die SIM-Karte zugreifen können, so müssen jedoch Mechanismen bereitgestellt werden, durch welche die Abhörsicherheit gewährleistet wird. Die nächste SIM-Karten Generation sieht daher unterschiedliche Bereiche auf der SIM-Karte vor.

Eine möglich Aufteilung könnte die folgende Form aufweisen: Ein erster Bereich ist der so genannte TSD-Bereich (Trusted Third Party Security Domain). Auf diesen Bereich können so genannte Trusted Third Parties (TTPs) zugreifen, also beispielsweise Unternehmen, welche mit einem Netzbetreiber einen entsprechenden Vertrag geschlossen haben und dadurch Zugriffsrechte erlangt haben. Ein zweiter Bereich ist der so genannte ISD-Bereich (Issuer Security Domain), auf den nur der Netzbetreiber zugreifen darf. Es ist davon auszugehen, dass künftig mehrere TSDs auf einer SIM-Karte vorhanden sein werden, so dass mehrere TTPs nebeneinander existieren können. Der TSD-Bereich kann ferner in SPSD-Unterbereiche (Service Provider Security Domain) innerhalb einer TSD unterteilt sein, wobei mehrere derartige Unterbereiche pro TSD existieren können. Die SPSD ist für Service-Provider, also Unternehmen, welche Ihre Applikationen, wie beispielsweise das sog. Electronic Banking auf der SIM-Karte ablegen, vorgesehen. Hierbei sind jedoch besondere Sicherheitsanforderungen zu erfüllen.

Verschiedene Standardisierungsgremien wie beispielsweise die GSMA (GSM Association) geben Empfehlungen aus, wie der Zugriff auf die einzelnen Bereiche in einer sicheren Weise erfolgen soll. Wenn eine der Parteien in ihren Bereich, beispielsweise ein Netzbetreiber in den ISD-Bereich oder eine TTP in den TSD-Bereich oder ein Service-Provider in den SPSD-Bereich, etwas aufspielen möchte, dann muss gewährleistet werden, dass sich die Parteien gegenseitig nicht abhören können. Der Vorschlag der GSMA hierzu ist, dass jede Partei direkt von einem SIM-Hersteller einen entsprechenden Schlüssel erhält, mit dem diese auf den ihr zugewiesenen Bereich zugreifen kann. Dies bedeutet technisch jedoch, dass der SIM-Hersteller neben der heute existierenden Schnittstelle zum Netzbetreiber noch weitere Schnittstellen zu den TTPs und zu den Service Providern unterhalten müsste. Da jede SIM-Karte mit einem Schlüssel versehen ist, müssten beispielsweise bei einem ISD, 5 TSDs und 10 SPSDs pro TSD etwa 56 Schlüssel pro SIM-Karte bereitgestellt werden. Bei geschätzten 30 Millionen Benutzern müssten daher 1,68 Milliarden voneinander unabhängige Schlüssel zentral bereitgestellt, verwaltet und verteilt werden, was mit sehr hohen Kosten verbunden ist.

Zum Beispiel zeigen die Dokumente US 2008/0162715 und EP 1 860 840 A2 Verfahren für die Personalisierung eines Sicherungsmoduls.

Es ist daher die Aufgabe der Erfindung, ein Verfahren zur Bereitstellung von Daten auf mindestens einen Bereich einer Chip-Karte, vorzugsweise einer SIM-Karte zu offenbaren, welches die oben genannten Nachteile überwindet, insbesondere effizient, einfach und mit einer geringeren Anzahl an unabhängigen Schlüsseln zu betreiben ist.

Diese Aufgabe wird durch die Merkmale des unabhängigen Anspruches 1 gelöst. Vorteilhafte Weiterbildungsformen der Erfindung sind in den abhängigen Ansprüchen wiedergegeben.

Das erfindungsgemäße Verfahren zum Bereitstellen von Daten auf mindestens einen, vorzugsweise gesicherten, Bereich einer Chip-Karte, vorzugsweise einer SIM-Karte, ist durch die folgenden Verfahrensschritte gekennzeichnet:
- Bereitstellen eines Verschlüsselungs-Codes seitens einer ersten Stelle an eine zweite Stelle,
- Bereitstellen eines dem Verschlüsselungs-Codes entsprechenden Entschlüsselungs-Codes seitens der ersten Stelle auf die Chip-Karte,
- Anwenden des Verschlüsselungs-Codes zum Erzeugen eines verschlüsselten Datensatzes aus einem Datensatz,
- Bereitstellen des verschlüsselten Datensatzes an eine dritte Stelle,
- Übertragen des verschlüsselten Datensatzes auf den mindestens einen Bereich einer Chip-Karte,
- Anwenden des Entschlüsselungs-Codes zum Entschlüsseln des verschlüsselten Datensatzes zu dem Datensatz auf der Chip-Karte.

Der Kern des erfindungsgemäßen Verfahrens besteht darin, dass von der ersten Stelle ein Verschlüsselungs-Code ausschließlich an eine zweite Stelle übermittelt wird, die damit einen Datensatz verschlüsselt. Die Übertragung des so verschlüsselten Datensatzes auf die Chip-Karte wird dann seitens der dritten Stelle durchgeführt. Es findet folglich eine Trennung zwischen der Verschlüsselung und der Übermittlung der verschlüsselten Daten auf die Chip-Karte statt. Im Rahmen der Erfindung soll der Begriff "Verschlüsselungs-Code" einen beliebig ausgestalteten kryptografischen Schlüssel bezeichnen. Bei dem Entschlüsselungs-Code kann es sich um eine kryptografische Entschlüsselungsregel handeln. Mittels des Entschlüsselungs-Codes wird aus dem Datensatz z. B. mit Hilfe einer mathematischen Funktion oder eines Algorithmus der verschlüsselte Datensatz generiert. Unter Zuhilfenahme des Entschlüsselungs-Codes findet eine Rücktransformation des verschlüsselten Datensatzes in den Datensatz statt, welcher dann von einem Benutzer gelesen und/oder auf der Chip-Karte verarbeitet werden kann. Durch das erfindungsgemäße Verfahren ist es der ersten Stelle, wie etwa einem Chip-Karten-Hersteller, möglich eine zweite Stelle, wie etwa einen Service Provider, mit dem Verschlüsselungs-Code zu versorgen. Dieser Verschlüsselungs-Code versetzt die zweite Stelle in die Lage, Informationen, welche diese gerne auf der Chip-Karte gespeichert haben möchte, zu verschlüsseln. Durch die Übergabe des verschlüsselten Datensatzes ist es der dritten Stelle, wie etwa einer Trusted Third Party und/oder einem Netzwerkbetreiber nicht möglich, diesen Datensatz zu verändern und/oder zu lesen. Vielmehr dient die dritte Stelle vorrangig zum Übertragen des verschlüsselten Datensatzes auf den mindestens einen Bereich der Chip-Karte. Der dritten Stelle ist es somit möglich auf die Chip-Karte zuzugreifen, nicht allerdings auf den Datensatz. Im Gegensatz dazu ist es der zweiten Stelle möglich den Datensatz mittels des Verschlüsselungs-Codes zu verschlüsseln, nicht allerdings auf die Chip-Karte zuzugreifen. Dadurch findet eine erfindungsgemäße Reduktion der Anzahl jener Schlüssel statt. Bei der Chip-Karte kann es sich insbesondere um eine SIM-Karten (SIM: Subscriber Identity Module) handeln. Dabei hat es sich als besonders vorteilhaft herausgestellt, wenn das erfindungsgemäße Verfahren für SIM-Karten von Mobilfunktelefonen Verwendung findet.

Eine vorteilhafte Ausgestaltung des erfindungsgemäßen Verfahrens zeichnet sich durch den folgenden Schritt aus:
- Bereitstellen eines ersten Zugangsschlüssels seitens der ersten Stelle an die dritte Stelle.

Im Rahmen dieses Verfahrensanspruches wird von der ersten Stelle an die dritte Stelle ein Schlüssel übergeben. Im Gegensatz zu dem Verschlüsselungs-Code handelt es sich um einen Zugangsschlüssel. Dieser Zugangsschlüssel dient folglich nicht dazu einen Datensatz zu verschlüsseln. Vorteilhafter Weise wird dieser Zugangsschlüssel für folgenden Verfahrensschritt genutzt:
- Anwenden des ersten Zugangsschlüssels zum Zugreifen auf einen ersten gesicherten Bereich der Chip-Karte beim Übertragen des verschlüsselten Datensatzes.

Der Zugangsschlüssel ermöglicht es der dritten Stelle den verschlüsselten Datensatz auf einen ersten gesicherten Bereich der Chip-Karte zu überspielen. Dieser erste gesicherte Bereich kann nur mittels des Zugangsschlüssels geöffnet werden. Somit ist es insbesondere der zweiten Stelle nicht möglich, den verschlüsselten Datensatz direkt auf die Chip-Karte aufzuspielen. Es bedarf vielmehr der dritten Stelle, die in Besitzt des ersten Zugangsschlüssels ist, um den verschlüsselten Datensatz in den ersten gesicherten Bereich zu spielen. Der erste gesicherte Bereich kann Teil jenes Bereiches der Chip-Karte sein, auf dem erfindungsgemäß die Daten hinterlegt werden.

Eine weitere vorteilhafte Ausführungsvariante des erfindungsgemäßen Verfahrens zeichnet sich durch den folgenden Schritt aus:
- Bereitstellen eines zweiten Zugangsschlüssels seitens der ersten Stelle an die zweite Stelle.

Im Rahmen dieses Verfahrensschrittes wird der zweiten Stelle ein zweiter Zugangsschlüssel bereitgestellt. Wiederum handelt es sich wie bei dem ersten Zugangsschlüssel nicht um einen Verschlüsselungs-Code.

Im Rahmen einer weiteren vorteilhaften Ausgestaltung ist der folgende Verfahrensschritt vorgesehen:
- Hinzufügen des zweiten Zugangsschlüssels zu dem Datensatz vor Anwenden des Verschlüsselungs-Codes zum Erzeugen eines verschlüsselten Datensatzes.

Im Rahmen dieses Schrittes wird der zweite Zugangsschlüssel mit dem Datensatz unter Verwendung des Verschlüsselungs-Codes in den verschlüsselten Datensatz überführt. Der verschlüsselte Datensatz enthält somit nicht mehr ausschließlich den Datensatz, sondern auch den zweiten Zugangsschlüssel. Der so erzielte verschlüsselte Datensatz kann von der dritten Stelle auf die Chip-Karte übertragen werden. Durch die Verschlüsselung mit dem Verschlüsselungs-Code ist es der dritten Stelle allerdings nicht möglich, auf den zweiten Zugangsschlüssel zuzugreifen.

Im Rahmen einer weiteren vorteilhaften Ausgestaltung ist folgender Verfahrensschritt vorgesehen:
- Anwenden des zweiten Zugangsschlüssels zum Zugreifen auf einen zweiten gesicherten Bereich der Chip-Karte nach Anwenden des Entschlüsselungs-Codes zum Entschlüsseln des verschlüsselten Datensatzes zu dem Datensatz auf der Chip-Karte.

Der mittels des verschlüsselten Datensatzes an die Chip-Karte übermittelte zweite Zugangsschlüssel dient folglich zum Zugriff auf den zweiten gesicherten Bereich der Chip-Karte. Dieser zweite gesicherte Bereich kann in den ersten gesicherten Bereich und/oder dem Bereich der Chip-Karte angeordnet sein. Es bedarf somit des ersten Zugangsschlüssels, damit die dritte Stelle den verschlüsselten Datensatz in den ersten gesicherten Bereich überführen kann. Dort kann mittels des Entschlüsselungs-Codes eine Entschlüsselung des verschlüsselten Datensatzes stattfinden. Der entpackte zweite Zugangsschlüssel ermöglicht ein Öffnen des zweiten gesicherten Bereiches, um den Datensatz in diesen zweiten gesicherten Bereich zu überführen. Nach dem Entschlüsseln des verschlüsselten Datensatzes auf der Chip-Karte ist es der dritten Stelle trotz des Besitzes des ersten Zugangsschlüssels nicht möglich in den zweiten gesicherten Bereich einzudringen und den Datensatz in unverschlüsselter Form zu erlangen.

Eine weitere vorteilhafte Ausgestaltung des erfindungsgemäßen Verfahrens zeichnet sich durch den folgenden Schritt aus:
- Bereitstellen eines einzigen Verschlüsselungs-Codes und eines dem Verschlüsselungs-Codes entsprechenden einzigen Entschlüsselungs-Codes für eine Mehrzahl von Chip-Karten.

Dieser Verfahrensschritt weist den Vorteil auf, dass die Anzahl der Verschlüsselungs-Codes und/oder der Entschlüsselungs-Codes deutlich reduziert werden können. Es bedarf nur noch eines einzigen oder einer sehr geringen Zahl von Verschlüsselungs-Codes, die an die zweite Stelle übermittelt werden und/oder auf der Chip-Karte hinterlegt werden. Somit reduziert sich die Gesamtzahl der für die Bereitstellung von Daten auf mindestens einen, vorzugsweise gesicherten Bereich einer Chip-Karte genutzten Verschlüsselungs-Codes und Entschlüsselungs-Codes signifikant. Nunmehr muss nicht für jede Chip-Karte ein individuelles Paar von Verschlüsselungs-Codes und Entschlüsselungs-Codes bereit gestellt werden.

Zur Erhöhung der Sicherheit des erfindungsgemäßen Verfahrens hat sich folgender Verfahrensschritt als Vorteilhaft herausgestellt:
- Bereitstellen von einem jeweils einer Chip-Karte eindeutig zugeordneten ersten Zugangsschlüssel und/oder einem einer Chip-Karte eindeutig zugeordneten zweiten Zugangsschlüssel.

Im Gegensatz zu den Verschlüsselungs-Codes werden der erste und/oder der zweite Zugangsschlüssel jeweils individuell einer Chip-Karte zugeordnet. Somit ist es nur jenen Parteien möglich auf die Chip-Karte bzw. die gesicherten Bereiche zuzugreifen, die im Besitz des jeweils passenden Zugangsschlüssels sind.

Eine vorteilhafte Ausgestaltung der Erfindung zeichnet sich dadurch aus, dass die Chip-Karte eine SIM-Karte ist.

Weitere Vorteile, Merkmale oder Einzelheiten der Erfindung sind in der nachfolgenden Beschreibung, in der unter Bezugnahme auf die Zeichnungen Ausführungsbeispiele der Erfindung im Einzelnen erläutert werden, beschrieben. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung einer Chip-Karte,
- Figur 2: eine schematische Darstellung der Verfahrensschritte zur Bereitstellung von Daten auf die Chip-Karte,
- Figur 3: eine weitere Ausführungsvariante des erfindungsgemäßen Verfahrens und
- Figur 4: eine zusätzliche Ausführungsvariante des erfindungsgemäßen Verfahrens.

Das erfindungsgemäße Verfahren dient dazu um Daten auf mindestens einem, vorzugsweise gesicherten, Bereich einer Chip-Karte, bereit zu stellen. Im Rahmen der folgenden Beschreibung wird angenommen, dass es sich bei der Chip-Karte um eine SIM-Karte (SIM: Subscriber Identity Module) handelt. Folglich werden die Bezeichnungen Chip-Karte und SIM-Karte als Synonym verwendet. Dieses soll allerdings nicht als eine Beschränkung angesehen werden, sondern dient vielmehr nur der Verdeutlichung der Erfindung.

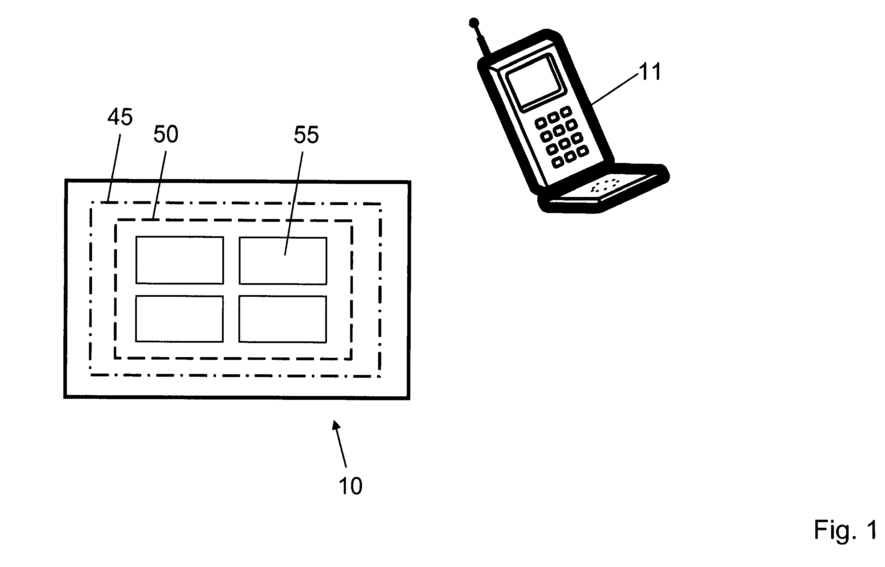

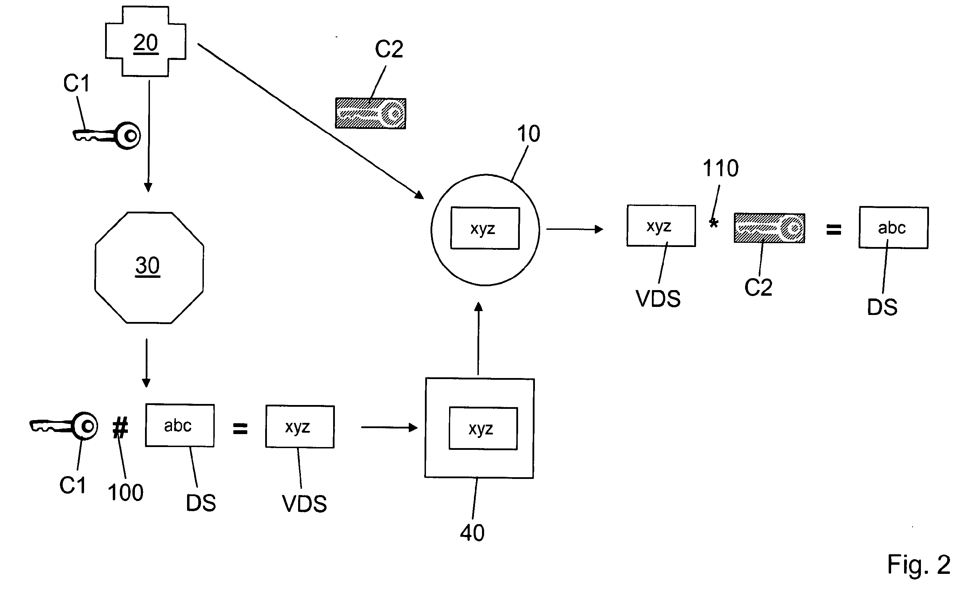

In Figur 1 ist eine erfindungsgemäße SIM-Karte 10 dargestellt. Solch ein SIM-Karte (10) kann z. B. in einem Mobiltelefon 11 verwendet werden. Die SIM-Karte 10 dient dabei zur Identifikation des Nutzers des Mobiltelefones 11 in einem Mobilfunknetz. In dem dargestellten Ausführungsbeispiel weist die SIM-Karte 10 einen Bereich 45 auf, in dem Daten und/oder Codes hinterlegt und/oder abgerufen werden können. Ein Teil dieses Bereiches 45 weist einen ersten gesicherten Bereich 50 sowie vier zweite gesicherte Bereiche 55 auf. Im Rahmen des erfindungsgemäßen Verfahrens sollen Daten in dem ersten gesicherten Bereich 50 und/oder in dem zweiten gesicherten Bereich 55 bereitgestellt werden. Das dazu genutzte erfindungsgemäße Verfahren ist in Figur 2 verdeutlicht.

Eine erste Stelle 20 stellt einen Verschlüsselungs-Code c1 einer zweiten Stelle 30 zur Verfügung. Bei der ersten Stelle 20 kann es sich etwa um einen SIM-Karten-Hersteller handeln, der den Verschlüsselungs-Code c1 der zweiten Stelle 30 zustellt. Bei dieser zweiten Stelle 30 kann es sich um einen Service Provider handeln, der definierte Dienste über die SIM-Karte 11 anbieten möchte. So ist es z. B. denkbar, dass die zweite Stelle 30 ein Kreditkarten-Hersteller und/oder eine Eisenbahn-Gesellschaft ist, die ihre Applikation auf der SIM-Karte 10 ablegen und entsprechende Daten auf diese übermitteln möchte. Im Rahmen des ersten Verfahrensschrittes wird nun dieser zweiten Stelle 30 der Schlüssel c1 übermittelt. Parallel dazu kann die erste Stelle 20 einen passenden Entschlüsselungs-Code c2 an die SIM-Karte 10 übermitteln. Handelt es sich bei der ersten Stelle 20 um den SIM-Karten-Hersteller, ist diesem eine direkte Integration des Entschlüsselungs-Codes c2 in der SIM-Karte 10 möglich.

Unter Zuhilfenahme des Verschlüsselungs-Codes c1 kann die zweite Stelle 30 eine Verschlüsselung 100 eines Datensatzes DS vornehmen. Bei dem Datensatz DS kann es sich beispielweise um Informationen handeln, die die zweite Stelle 30 für ihre Applikation auf der Chip-Karte 10 benötigt. Durch die Verschlüsselung 100 des Datensatzes DS mit dem Verschlüsselungs-Code c1 wird ein verschlüsselter Datensatz VDS generiert. Dieser verschlüsselte Datensatz VDS wird an eine dritte Stelle 40 übermittelt. Bei der dritten Stelle 40 kann es sich um einen Netzwerkbetreiber oder eine sonstige vertrauenswürdige Stelle handeln, die zur Übermittlung des verschlüsselten Datensatzes VDS von der zweiten Stelle 30 an die Chip-Karte 10 genutzt wird. Im Rahmen des in Figur 2 gezeigten Verfahrens dient die dritte Stelle 30 somit nur zur Übertragung des verschlüsselten Datensatzes VDS auf den mindestens einen Bereich 45 der Chip-Karte 10. Auf der Chip-Karte 10 kann nun automatisch und/oder durch ein äußeres Signal angeregt eine Entschlüsselung 110 des verschlüsselten Datensatzes VDS durch den Schlüssel c2 stattfinden. Nach der Anwendung des Entschlüsselungs-Codes c2 befindet sich somit auf der Chip-Karte 10 der Datensatz DS in seiner entschlüsselten Form.

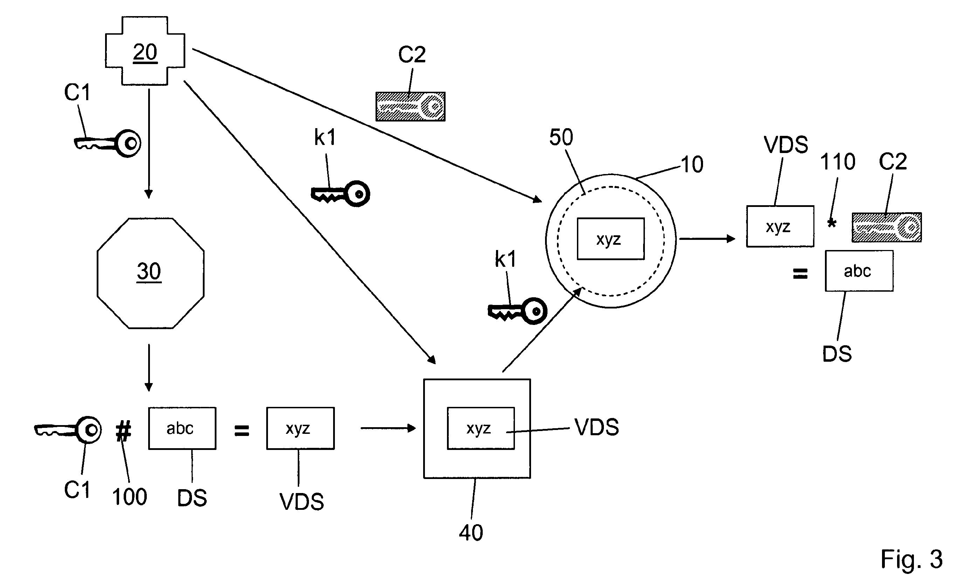

Eine weitere vorteilhafte Ausführungsvariante des erfindungsgemäßen Verfahrens ist in der Figur 3 gezeigt. Wiederum übermittelt die erste Stelle 20 an die zweite Stelle 30 den Verschlüsselungs-Code c1. Dieser dient zur Verschlüsselung 100 des Datensatzes DS. Der so erzeugte verschlüsselte Datensatz VDS wird an die dritte Stelle 40 übertragen. Ergänzend zu den in Figur 2 gezeigten Verfahrensschritten übermittelt die erste Stelle 20 einen ersten Zugangsschlüssel k1 an die dritte Stelle 40. Dieser erste Zugangsschlüssel k1 ermöglicht es der dritten Stelle 40 auf einen ersten gesicherten Bereich 50 der Chip-Karte 10 zuzugreifen. Dieser erste gesicherte Bereich 50 kann gleich oder ein Teil des Bereiches 45 sein. Im dargestellten Beispiel umfasst der erste gesicherte Bereich 50 den gesamten Bereich 45 der SIM-Karte 10. Ohne den ersten Zugangsschlüssel k1 ist somit ein Übermitteln des verschlüsselten Datensatzes VDS auf die Chip-Karte 10 nicht möglich. Denn nur mittels des ersten Zugangsschlüssels k1 kann die dritte Stelle 40 auf den ersten gesicherten Bereich 50 zugreifen. Dadurch ist ein erhöhter Schutz der in den ersten Bereich 50 hinterlegten Informationen und/oder verschlüsselten Datensätzen und/oder Datensätzen gewährleistet. Wiederum findet automatisch und/oder durch ein äußeres Signal aktiviert eine Entschlüsselung 110 des verschlüsselten Datensatzes VDS unter Zuhilfenahme des Entschlüsselungs-Codes c2 statt. Der so resultierende entschlüsselte Datensatz DS kann anschließend in dem ersten gesicherten Bereich 50 lagern. Diese Ausführungsvariante zeichnet sich dadurch aus, dass einerseits der zweiten Stelle 30 zwar die Verschlüsselung 100 des Datensatzes DS mittels des Verschlüsselungs-Codes c1 möglich ist, aber andererseits keine Integration des verschlüsselten Datensatzes VDS in den ersten gesicherten Bereich 50. Andererseits ist es der dritten Stelle 40 zwar möglich den verschlüsselten Datensatz VDS unter Hilfenahme des ersten Zugangsschlüssels k1 in den ersten gesicherten Bereich 50 zu überführen. Es ist der dritten Stelle 40 allerdings verwehrt den verschlüsselten Datensatz VDS zu entschlüsseln, da die dritte Stelle 40 nicht im Besitz des Entschlüsselungs-Codes c2 ist.

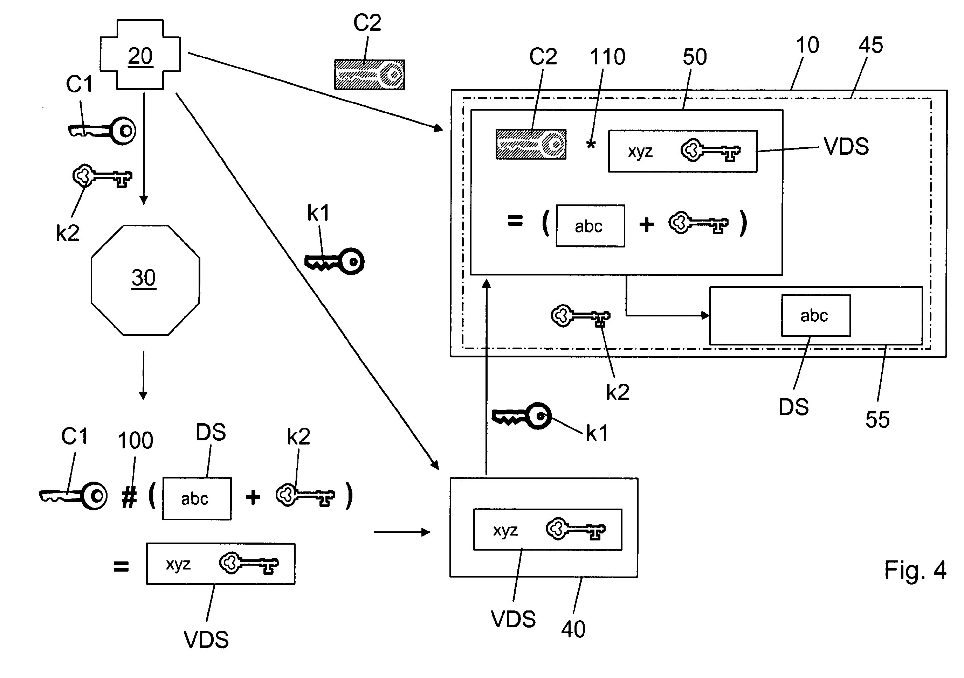

In Figur 4 ist eine weitere Ergänzung des erfindungsgemäßen Verfahrens um weitere vorteilhafte Verfahrensschritte dargestellt. Im Rahmen dieses Verfahrens wird von Seiten der ersten Stelle 20 nicht nur der Verschlüsselungs-Code c1 an die zweite Stelle 30 übermittelt, sondern auch ein zweiter Zugangsschlüssel k2. Dieser zweite Zugangsschlüssel k2 dient später zum Zugriff auf einen zweiten gesicherten Bereich 55 der SIM-Karte. Die zweite Stelle 30 kombiniert nun den Datensatz DS mit dem zweiten Zugangsschlüssel k2 und verschlüsselt 100 beide mit dem Verschlüsselungs-Code c1. Der sich so ergebende verschlüsselte Datensatz VDS enthält folglich sowohl den Datensatz DS als auch den zweiten Zugangsschlüssel k2. Dieser verschlüsselte Datensatz VDS wird der dritten Stelle 40 übergeben. Die dritte Stelle 40 ist wiederum in Besitz des ersten Zugangsschlüssels k1, welcher von der ersten Stelle 20 an diese übermittelt wurde. Mittels des ersten Zugangsschlüssels k1 ist es der dritten Stelle 40 möglich auf den ersten gesicherten Bereich 50 der Chip-Karte 10 zuzugreifen. Auf der Chip-Karte 10 findet dann automatisch und/oder durch ein äußeres Signal aktiviert, eine Entschlüsselung 110 des verschlüsselten Datensatzes VDS unter Zuhilfenahme des Entschlüsselungs-Codes c2 statt. Als Resultat befinden sich auf dem ersten gesicherten Bereich 50 sowohl der Datensatz DS als auch der zweite Zugangsschlüssel k2. Mittels des zweiten Zugangsschlüssels k2 ist dann ein Zugang zu dem zweiten gesicherten Bereich 55 möglich. Die Öffnung des zweiten Zugangsbereiches 55 mittels des zweiten Zugangsschlüssels k2 kann automatisch und/oder durch ein äußeres Signal aktiviert werden. Nach dem Öffnen des zweiten gesicherten Bereiches 55 kann der Datensatz DS in diesen eingeführt werden. Die Besonderheit des erfindungsgemäßen Verfahrens besteht darin, dass die dritte Stelle 40 zwar den ersten Zugangsschlüssel k1 besitzt, der es ihr ermöglicht auf den ersten gesicherten Bereich 50 zuzugreifen. Da allerdings der Datensatz DS nach dem Entschlüsseln 110 aus dem ersten gesicherten Bereich 50 unter Zuhilfenahme des zweiten Zugangsschlüssels k2 in den zweiten gesicherten Bereich 55 verschoben wird, ist es der dritten Stelle 40 nicht möglich auf den Datensatz DS zuzugreifen. Vielmehr müsste die dritte Stelle dazu im Besitz des Schlüssels k2 sein. Dieses ist aber erfindungsgemäß nicht der Fall.

### Bezugszeichenliste

- 10: Chip-Karte, SIM-Karte
- 11: Mobilfunkgerät

- 20: ersten Stelle
- 30: zweite Stelle
- 40: dritte Stelle
- 45: Bereich der Chip-Karte 10
- 50: erste gesicherte Bereich
- 55: zweite gesicherte Bereich

- c1: Verschlüsselungs-Codes
- c2: Entschlüsselungs-Codes
- k1: ersten Zugangsschlüssels
- k2: zweiten Zugangsschlüssels

- DS: Datensatz
- VDS: verschlüsselten Datensatzes

- 100: Verschlüsseln
- 110: Entschlüsseln

## Patentansprüche

1. Verfahren zum Bereitstellen von Daten auf mindestens einen gesicherten Bereichs (45) einer SIM-Karte (10), mit den Schritten
- Bereitstellen eines Verschlüsselungs-Code (c1) seitens einer ersten Stelle (20) an eine zweite Stelle (30),
- Bereitstellen eines dem Verschlüsselungs-Code (c1) entsprechenden Entschlüsselungs-Codes (c2) seitens der ersten Stelle (20) auf die SIM-Karte (10),
**gekennzeichnet durch**
- Anwenden des Verschlüsselungs-Codes (c1) zum Erzeugen eines verschlüsselten Datensatzes (VDS) aus einem Datensatz (DS) **durch** die zweite Stelle (30),
- Bereitstellen des verschlüsselten Datensatzes (VDS) von der zweiten Stelle (30) an eine dritte Stelle (40),
- Übertragen des verschlüsselten Datensatzes (VDS) von der dritten Stelle (40) auf den mindestens einen Bereich (45) der SIM-Karte (10),
- Anwenden des Entschlüsselungs-Codes (c2) zum Entschlüsseln des verschlüsselten Datensatzes (VBS) zu dem Datensatz (DS) auf der SIM-Karte (10),
- Bereitstellen eines ersten Zugangsschlüssels (k1) seitens der ersten Stelle (20) an die dritte Stelle (40) und Übertragen des ersten Zugangsschlüssels (k1) von der dritten Stelle (40) auf die SIM-Karte (10).

2. Verfahren nach Anspruch 1, **gekennzeichnet durch**
- Anwenden des ersten Zugangsschlüssels (k1) zum Zugreifen auf einen ersten gesicherten Bereich (50) der SIM-Karte (10) beim Übertragen des verschlüsselten Datensatzes (VDS).

3. Verfahren nach einem der vorhergehenden Ansprüche, **gekennzeichnet durch**
- Bereitstellen eines zweiten Zugangsschlüssels (k2) seitens der ersten Stelle (20) an die zweite Stelle (30).

4. Verfahren nach Anspruch 3, **gekennzeichnet durch**
- Hinzufügen des zweiten Zugangsschlüssels (k2) zu dem Datensatz (DS) vor Anwenden des Verschlüsselungs-Codes (c1) zum Erzeugen eines verschlüsselten Datensatzes (VDS).

5. Verfahren nach Anspruch 4, **gekennzeichnet durch**
- Anwenden des zweiten Zugangsschlüssels (k2) zum Zugreifen auf einen zweiten gesicherten Bereich (55) der SIM-Karte (10) nach Anwenden des Entschlüsselungs-Codes (c2) zum Entschlüsseln des verschlüsselten Datensatzes (VBS) zu dem Datensatz (DS) auf der SIM-Karte (10).

6. Verfahren nach einem der vorhergehenden Ansprüche, **gekennzeichnet durch**
- Bereitstellen eines einzigen Verschlüsselungs-Codes (c1) und eines dem Verschlüsselungs-Codes (c1) entsprechenden einzigen Entschlüsselungs-Codes (c2) für eine Mehrzahl von SIM-Karten (10).

7. Verfahren nach einem der Ansprüche 3 bis 6, **gekennzeichnet durch** Bereitstellen von einem jeweils einer SIM-Karte (10) eindeutig zugeordneten ersten Zugangsschlüssel (k1) und/oder einem einer SIM-Karte (10) eindeutig zugeordneten zweiten Zugangsschlüssel (k2).

## Claims

1. A method for providing data on at least one secure area (45) of a SIM card (10), with the following steps:
- providing an encryption code (c1) from a first location (20) to a second location (30),
- providing a decryption code (c2) corresponding to the encryption code (c1) from the first location (20) to the SIM card (10),
**characterised by**
- applying the encryption code (c1) to produce an encrypted data set (VDS) from a data set (DS) using the second location (30),
- providing the encrypted data set (VDS) from the second location (30) to a third location (40),
- transmitting the encrypted data set (VDS) from the third location (40) to the at least one area (45) of the SIM card (10),
- applying the decryption code (c2) to decode the encrypted data set (VDS) to the data set (DS) on the SIM card (10),
- providing a first access code (k1) from the first location (20) to the third location (40) and transmitting the first access code (k1) from the third location (40) to the SIM card (10).

2. The method according to claim 1, **characterised by**
- applying the first access code (k1) to gain access to a first secure area (50) of the SIM card (10) during transmission of the encrypted data set (VDS).

3. The method according to one of the preceding claims, **characterised by**
- providing a second access code (k2) from the first location (20) to the second location (30).

4. The method according to claim 3, **characterised by**
- adding the second access code (k2) to the data set (DS) before applying the encryption code (c1) to create an encrypted data set (VDS).

5. The method according to claim 4, **characterised by**
- applying the second access code (k2) to gain access to a second secure area (55) of the SIM card (10) after applying the decryption code (c2) to decode the encrypted data set (VDS) to the data set (DS) on the SIM card (10).

6. The method according to one of the preceding claims, **characterised by**
- providing a single encryption code (c1) and a single decryption code (c2) corresponding to the encryption code (c1) for a plurality of SIM cards (10).

7. The method according to one of claims 3 to 6, **characterised by**
- providing a first access code (k1) uniquely assigned to a SIM card (10) and/or a second access code (k2) uniquely assigned to a SIM card (10).

## Revendications

1. Procédé pour la mise à disposition de données sur au moins une zone sécurisée (45) d'une carte SIM (10) avec les étapes suivantes :
- la mise à disposition d'une clé de chiffrement (c1) par une première autorité (20) à l'attention d'une deuxième autorité (30),
- la mise à disposition d'une clé de déchiffrement (c2) correspondant à la clé de chiffrement (c1) par la première autorité (20) sur la carte SIM (10),
**caractérisé par**
- l'utilisation de la clé de chiffrement (c1) pour générer un jeu de données chiffrées (VDS) à partir d'un jeu de données (DS) par la deuxième autorité (30),
- la mise à disposition du jeu de données chiffrées (VDS) par la deuxième autorité (30) à l'attention d'une troisième autorité (40),
- le transfert du jeu de données chiffrées (VDS) par la troisième autorité (40) sur cette au moins une zone (45) de la carte SIM (10),
- l'utilisation de la clé de déchiffrement (c2) pour le déchiffrement du jeu de données chiffrées (VDS) pour le jeu de données (DS) sur la carte SIM (10),
- la mise à disposition d'une première clé d'accès (k1) par la première autorité (20) à l'attention de la troisième autorité (40) et le transfert de la première clé d'accès (k1) par la troisième autorité (40) sur la carte SIM (10).

2. Procédé selon la revendication 1, **caractérisé par**
- l'utilisation de la première clé d'accès (k1) pour accéder à une première zone sécurisée (50) de la carte SIM (10) lors du transfert du jeu de données chiffrées (VDS).

3. Procédé selon l'une des revendications précédentes, **caractérisé par**
- la mise à disposition d'une deuxième clé d'accès (k2) par la première autorité (20) à l'attention de la deuxième autorité (30).

4. Procédé selon la revendication 3, **caractérisé par**
- l'ajout de la deuxième clé d'accès (k2) au jeu de données (DS) avant l'utilisation de la clé de chiffrement (c1) pour la génération d'un jeu de données chiffrées (VDS).

5. Procédé selon la revendication 4, **caractérisé par**
- l'utilisation de la deuxième clé d'accès (k2) pour accéder à une deuxième zone sécurisée (55) de la carte SIM (10) après l'utilisation de la clé de déchiffrement (c2) pour le déchiffrement du jeu de données chiffrées (VDS) pour le jeu de données (DS) sur la carte SIM (10).

6. Procédé selon l'une des revendications précédentes, **caractérisé par**
- la mise à disposition d'une seule clé de chiffrement (c1) et d'une seule clé de déchiffrement (c2) correspondant à la clé de chiffrement (c1) pour une pluralité de cartes SIM (10).

7. Procédé selon l'une des revendications 3 à 6, **caractérisé par**
- la mise à disposition d'une première clé d'accès (k1) associée de manière univoque respectivement à une carte SIM (10) et/ou d'une deuxième clé d'accès (k2) associée de manière univoque respectivement à une carte SIM (10).
